# DEMANDE DE BREVET EUROPEEN

(11) **EP 0 603 084 A1**
(43) Date de publication de la demande: **22.06.1994**
(21) Numéro de dépôt: 93403092.5
(22) Date de dépôt: 17.12.1993
(51) Int. Cl.: B60S 1/16

(54) **Motoréducteur, notamment pour l'entraînement d'un dispositif d'essuie-glace, en particulier pour véhicule automobile**

(30) Priorité: 17.12.1992 FR 9215243
(71) Demandeur: VALEO SYSTEMES D'ESSUYAGE, 78180 Montigny-Le-Bretonneux (FR)
(72) Inventeur: Vacca, Frédéric, F-78910 Behoust (FR)
(74) Mandataire: Gamonal, Didier

(57) **Abrégé**

Un motoréducteur comporte un moteur électrique qui entraîne une roue (15) commandant un mécanisme d'inversion de sens (18), ce mécanisme d'inversion de sens (18) commandant l'arbre de sortie (19) de ce motoréducteur.

Suivant l'invention, la roue (15) porte, de manière fixe, un entraîneur (19) reliant le mécanisme d'inversion de sens (18) à ladite roue.

## Description

La présente invention se rapporte à un motoréducteur, notamment pour l'entraînement d'un dispositif d'essuie-glace en particulier pour véhicule automobile.

Un tel motoréducteur est utilisé habituellement pour l'entraînement d'un essuie-glace adapté à essuyer une surface vitrée, telle qu'un pare-brise de véhicule automobile.

Dans les dispositifs de l'Art Antérieur un motoréducteur est constitué d'un moteur électrique composé d'un stator et d'un rotor dont l'arbre du rotor se prolonge par une vis sans fin entraînant une roue dentée commandant un mécanisme d'inversion de sens, tel qu'un système bielle-manivelle. La bielle, montée excentrée sur la roue dentée par l'intermédiaire d'un axe, procure un mouvement oscillatoire à la manivelle solidaire en rotation avec l'arbre de sortie du motoréducteur. Ce mouvement oscillatoire se tranforme en un mouvement de rotation alternatif à l'arbre de sortie qui est relié, par exemple, à un bras d'essuie-glace portant un balai d'essuie-glace ou un mécanisme de transmission de mouvement à des bras d'essuie-glace.

De même, il est connu un motoréducteur dans lequel l'arbre du rotor porte deux vis sans fin aptes à engréner avec deux pignons primaires, ces pignons entraînant deux pignons secondaires engrénant avec la roue dentée qui commande le mécanisme d'inversion de sens tel qu'évoqué précédemment.

Comme mieux décrit dans le document FR-A-2 240 623 publié le 7 mars 1975, il est prévu que la roue dentée présente une multiplicité d'évidements permettant de faire varier la distance entre l'axe de ladite roue et l'axe reliant la bielle du mécanisme d'inversion de sens.

De tels évidements sont prévus pour pouvoir faire varier l'angle de débattement de la manivelle et en conséquence de l'arbre de sortie entraînant le système d'essuie-glace.

La Demanderesse a cependant constaté qu'une telle disposition d'évidements sur la roue dentée entraînait un affaiblissement de la résistance de cette roue qui doit pouvoir résister au couple moteur de la vis sans fin et au couple résistant du mécanisme d'inversion de sens et de l'arbre de sortie.

En outre, un tel type de roue ne pouvait pas s'adapter à tout type d'angles de débattement souhaités pour l'arbre de sortie.

En effet, il était nécessaire de disposer d'une multiplicité de roues munies d'évidements de manière à pouvoir l'adpater au type d'angle que l'on souhaitait.

Afin de remédier aux inconvénients ci-dessus la Demanderesse se propose d'utiliser une roue dentée avec un dispositif très simple permettant de procurer n'importe quel type d'angles de débattement à l'arbre de sortie.

Pour cela, selon l'invention, un motoréducteur notamment pour l'entraînement d'un dispositif d'essuie-glace en particulier pour véhicule automobile comportant un moteur électrique commandant une roue mobile autour d'un axe et entraînant un mécanisme d'inversion de sens actionnant un arbre de sortie, est caractérisé en ce que la roue porte de manière fixe un entraîneur rapporté sur ladite roue et reliant le mécanisme d'inversion de sens à ladite roue.

Grâce à cet entraîneur on peut facilement régler l'entraxe entre la roue dentée et l'axe reliant la bielle du mécanisme d'inversion de sens à cette roue et cela par une simple pièce qui est rapportée par la suite sur cette roue, cette pièce étant d'un coût minime et d'élaboration très simple.

Selon une autre caractéristique de l'invention, l'entraîneur est formé par une plaquette.

Selon une autre caractéristique, l'entraîneur est porté par un logement prévu sur la roue.

Selon une autre caractéristique, le logement est formé par deux rebords saillants par rapport à l'une des faces de la roue.

Selon une autre caractéristique, les rebords sont disposés de part et d'autre de l'axe de la roue.

Selon une autre caractéristique, l'entraîneur porte un alésage pour la liaison avec le mécanisme d'inversion de sens.

Selon une autre caractéristique, l'entraîneur comporte un perçage coopérant avec l'arbre de la roue.

Selon une autre caractéristique, la plaquette est fixée sur la roue par un matage de l'extrémité de l'arbre de la roue.

Les autres avantages et caractéristiques de l'invention vont ressortir maintenant de la description qui va suivre en se référant aux dessins annexés sur lesquels :
- la figure 1 montre un motoréducteur selon l'invention,
- la figure 2 est une vue en coupe selon la ligne AA de la figure 1,
- la figure 3 est une vue en perspective partielle montrant une partie du motoréducteur selon l'invention,
- la figure 4 est une vue en perspective montrant un détail de réalisation de l'invention.

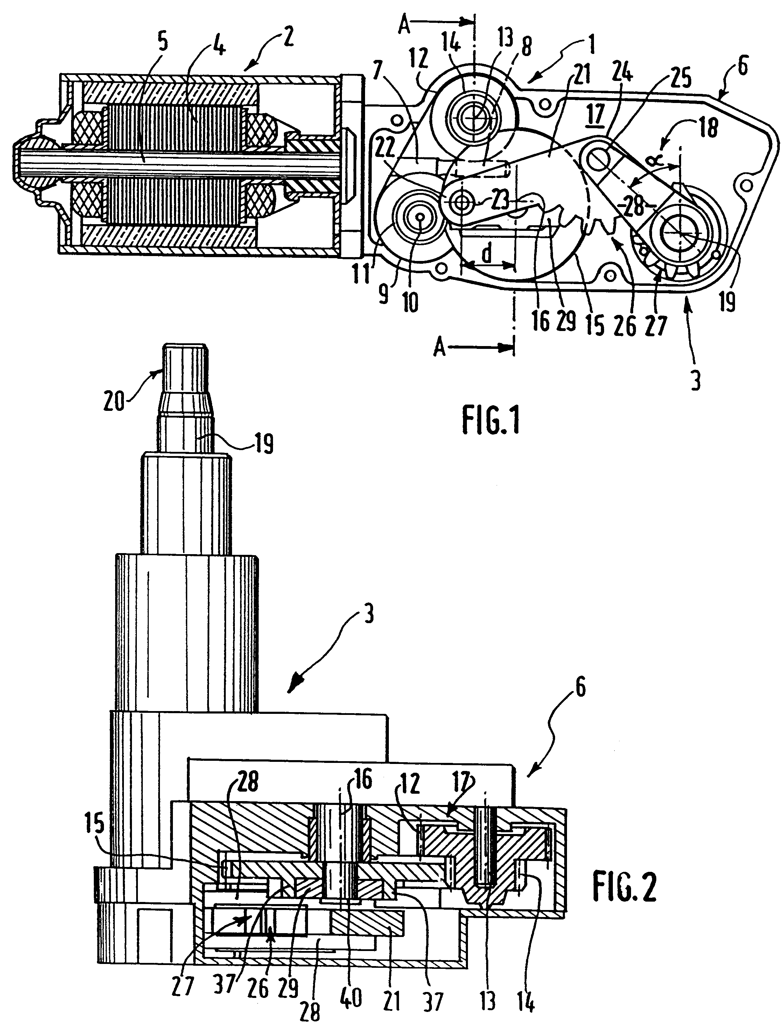

En se référant aux figures 1 et 2, le motoréducteur 1 est composé d'un moteur électrique 2 associé à un dispositif réducteur 3.

Dans le cas du motoréducteur représenté à titre d'exemple sur les figures, le moteur électrique 2 comprend un rotor 4 dont l'arbre du rotor 5 se prolonge à l'intérieur d'un carter 6 du réducteur 3 apte à recevoir le dispositif réducteur.

L'arbre 5 porte deux vis sans fin 7, 8 taillées en bout d'arbre et adjacentes l'une de l'autre, les pas des deux vis étant de sens contraire et égaux.

Avec la vis sans fin 7 coopère un pignon primaire 9 ayant un axe 10 perpendiculaire à l'axe général de l'arbre du rotor 5. Ce pignon porte de manière concentrique et solidaire un pignon secondaire 11 de plus petit diamètre.

Avec la vis sans fin 8 coopère un pignon primaire 12 ayant un axe 13 parallèle à l'axe 10. Ce pignon 12 porte, également de manière concentrique et solidairement, un pignon secondaire 14 de diamètre inférieur.

Comme mieux visible sur la figure 1, les diamètres des pignons primaires sont identiques ainsi que les diamètres des pignons secondaires et les axes 10, 13 sont disposés de part et d'autre de l'axe de l'arbre 5 en étant à la même distance de celui-ci.

Les pignons secondaires 11, 14 engrènent avec une roue dentée 15 ayant un axe de rotation 16 sensiblement parallèle aux axes 10, 13.

De manière pratique les axes 10, 13, 16 sont portés par le fond 17 du carter en permettant la rotation de ces pignons et de cette roue dentée.

La roue dentée 15 est apte à commander un mécanisme d'inversion de sens 18 permettant d'inverser le sens de rotation d'un arbre de sortie 19 que porte le fond du carter 17 de manière à obtenir un mouvement de rotation alternatif de cet arbre de sortie.

Comme mieux visible sur la figure 2, l'arbre de sortie 19 a une direction sensiblement parallèle aux axes 10, 13 et 16 en traversant le fond 17 du carter et en débouchant au-delà de celui-ci de manière à pouvoir être raccordé, par son extrémité libre 20, soit à un bras d'essuie-glace (non représenté), soit à un mécanisme de transmission de mouvement à un bras d'essuie-glace (également non représenté).

Le mécanisme d'inversion de sens 18 est constitué d'un bras 21 lié à rotation par l'une de ses extrémités 22 à la roue dentée 15 par un pion 23 disposé de manière excentrée par rapport à l'axe 16 de la roue tout en étant parallèle à celui-ci.

Ainsi le bras est soumis à un mouvement de rotation autour de l'axe 16 de la roue 15 tout en étant associé à un mouvement de translation résultant de la rotation du pion 23 autour de l'axe 16.

L'autre extrémité 24 du bras porte un axe 25 et, concentriquement audit axe, un secteur denté 26 apte à se débattre autour de l'axe 25.

Ce secteur denté 26 est apte à engréner avec un secteur d'entrée 27 porté de manière concentrique et solidaire par l'arbre de sortie 19.

L'arbre de sortie 19 est relié à l'axe 25 et, cela de manière connue en soi, par deux flasques 28 situés de part et d'autre des secteurs dentés 26, 27.

Les flasques 28 sont libres en rotation autour de l'axe de l'arbre de sortie 19 alors que l'axe 25 est monté fixe en rotation sur lesdits flasques de manière à pouvoir autoriser une oscillation du bras 21 autour de l'axe 25.

Ainsi, lors de la rotation de l'arbre 5 du rotor 4, les pignons primaires sont entraînés par cet arbre et les pignons secondaires, solidaires des pignons primaires, transmettent le mouvement de rotation à la roue dentée 15.

Pendant le mouvement de rotation de la roue 15, l'axe 23 porté par cette roue est entraîné en rotation autour de l'axe 16, ce mouvement de rotation étant transformé en un mouvement de rotation alternatif de l'arbre de sortie 19 par l'action du bras 21 et la coopération des secteurs dentés 26, 27.

Au vu de la figure 1, il est facilement compréhensible que la distance d correspondant à l'écartement entre l'axe 16 de la roue dentée 15 et l'axe du pion 23 donne un certain débattement angulaire de l'arbre de sortie 19, débattement correspondant à un angle Á marqué sur la figure.

Ainsi, en faisant varier la distance d telle que précédemment définie on fait varier en conséquence l'angle Á.

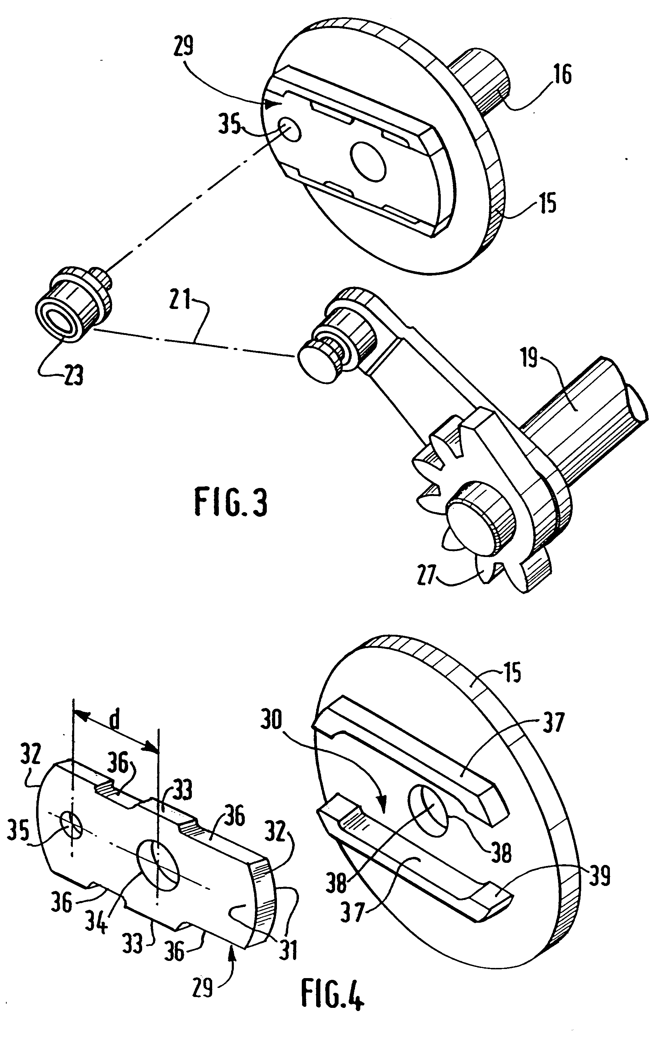

Pour ce faire, et en se référant maintenant en plus aux figures 3 et 4, il est prévu que la roue dentée 15 porte, de manière fixe, un entraîneur permettant de pouvoir faire varier à la demande la distance d et de ce fait l'angle Á.

L'entraîneur se présente sous la forme d'une plaquette 29 apte à être reçue dans un logement 30 prévu sur la roue dentée 15.

Cette plaquette 29 présente une forme sensiblement parallélépipédique deux grandes faces planes sensiblement parallèles entre elles 31, deux petites surfaces latérales 32, ici de forme arrondie et de deux grands côtés 33 parallèles entre eux et orthogonaux aux faces planes 31.

Les faces planes 31 sont traversées par un perçage 34 orthoganal aux faces planes et un alésage 35 situé à distance du perçage 34 tout en étant également orthogonal aux faces 31 de la plaquette 29.

En outre, les bords 33 de la plaquette 29 présentent des évidements 36 qui permettent d'alléger cette plaquette.

Cette plaquette est apte à être reçue dans le logement 30 de la roue 15 qui est ici constitué par deux rebords 37 sensiblement parallèles l'un à l'autre et à distance l'un de l'autre. Comme visible sur les figures la roue 15 est portée par un arbre 16 traversant un alésage 38 que comporte la roue 15 et les rebords 37 sont situés de part et d'autre de cet alésage 38.

En se référant en plus à la figure 2, ces rebords 37 font saillie par rapport à la face extérieure de la roue 15, ont une hauteur sensiblement égale à l'épaisseur de la plaquette 29, c'est-à-dire la distance séparant les deux faces planes 31 de cette plaquette et ont un écartement sensiblement égal à l'écartement compris entre les deux grands côtés 33 de ladite plaquette.

Comme visible sur la figure 4, ces rebords 37 ont une épaisseur sensiblement constante sauf à une de leurs extrémités qui présente un renflement 39 apte à coopérer avec les évidements 36 terminaux de la plaquette 29, c'est-à-dire ceux situés sur la partie droite de la figure 4.

De manière pratique le diamètre de l'alésage 38 de roue 15 et le diamètre du perçage 34 sont sensiblement identiques mais peuvent être différents, le diamètre du perçage 34 étant, dans ce cas, plus petit que le diamètre de l'alésage 38.

Ainsi, pour le montage de cet entraîneur sur la roue 15, il suffit de loger cette plaquette de façon à ce que l'alésage 34 corresponde à l'alésage 38 de la roue 15 d'introduire l'extrémité de l'arbre 16 puis, comme représenté sur la figure 2, de mater l'extrémité 40 de l'arbre 16 de façon à obtenir une liaison fixe par exemple entre la roue 15, la plaquette 29 et l'arbre 16.

De plus, cette plaquette est immobilisée en rotation par les deux rebords 37.

Après montage de cette plaquette sur la roue il suffit par la suite d'introduire l'axe 23 dans l'alésage 35 pour obtenir un motoréducteur tel que représenté à la figure 1.

Grâce à cette plaquette 29 il est facilement possible de pouvoir faire varier l'entraxe entre l'alésage 34, 35 et de ce fait l'angle Á de débattement de l'arbre de sortie 19 en disposant d'une multiplicité de plaquettes que l'on peut facilement monter sur la roue qui elle ne subira aucune modification lors de ces changements de plaquette, le logement 30 restant identique pour toutes les plaquettes.

La présente invention n'est pas limitée aux exemples de réalisation décrits mais englobe toute variante.

Notamment, il peut être envisagé que le système de réducteur ne comporte qu'une roue dentée entraînée directement par l'arbre de rotor 5, ladite roue dentée entraînant le mécanisme d'inversion de sens 18.

## Revendications

**1)** Motoréducteur, notamment pour l'entraînement d'un dispositif d'essuie-glace en particulier pour véhicule automobile comportant un moteur électrique (2) commandant une roue (15) mobile autour d'un axe (16) et entraînant un mécanisme d'inversion de sens (18) actionnant un arbre de sortie (19), caractérisé en ce que la roue (15) porte, de manière fixe, un entraîneur (29) rapporté sur ladite roue et reliant le mécanisme d'entraînement d'inversion de sens (18) à ladite roue.

**2)** Motoréducteur selon la revendication 1, caractérisé en ce que l'entraîneur est formé par une plaquette (29).

**3)** Motoréducteur selon la revendication 1 ou 2, caractérisé en ce que l'entraîneur (29) est porté par un logement (30) prévu sur la roue (15).

**4)** Motoréducteur selon la revendication 3, caractérisé en ce que le logement (30) est formé par deux rebords (37) saillants par rapport à l'une des faces de la roue (15).

**5)** Motoréducteur selon la revendication 4, caractérisé en ce que les rebords (37) sont disposés de part et d'autre de l'axe (16) de la roue (15).

**6)** Motoréducteur selon l'une des revendications précédentes, caractérisé en ce que l'entraîneur (29) porte un alésage (35) pour la liaison avec le mécanisme d'inversion de sens (18).

**7)** Motoréducteur selon l'une des revendications précédentes, dans lequel la roue (15) est portée par un arbre (16), caractérisé en ce que l'entraîneur (29) comporte un perçage (34) coopérant avec l'arbre (16) de la roue (15).

**8)** Motoréducteur selon la revendication 7, caractérisé en ce que l'entraîneur (29) est fixé sur la roue (15) par un matage de l'extrémité (40) de l'arbre (16) de la roue (15).
